# EUROPEAN PATENT APPLICATION

(11) **EP 4 531 300 A1**
(43) Date of publication of application: **02.04.2025**
(21) Application number: 23200687.4
(22) Date of filing: 28.09.2023
(51) Int. Cl.: H04B 7/185, H04W 36/14, H04W 48/18

(54) **METHOD FOR USING AN UNCREWED AERIAL SYSTEM**

(71) Applicant: Deutsche Telekom AG, 53113 Bonn (DE)
(72) Inventor: ALEKSIEV, Vasil, 1220 Wien (AT)
(74) Representative: Schwöbel, Thilo K.

(57) **Abstract**

The invention relates to a method for using an uncrewed aerial system with both a first and a second mobile communication network having, or using, different network identifiers in relation to or in the framework of application layer support for uncrewed aerial systems,
wherein the uncrewed aerial system is enabled to use connectivity provided by the first and, alternatively, provided by the second mobile communication network via an uncrewed aerial system application enabler server, UAE server, to an uncrewed aerial system application specific server, and wherein the uncrewed aerial system corresponds to, or realizes,
-- an uncrewed aerial system application specific client on an uncrewed aerial system application specific layer, and
-- an uncrewed aerial system application enabler client on an uncrewed aerial system application enabler layer,

wherein the uncrewed aerial system has, using a dual subscription functionality, both a native subscription to the first mobile communication network and to the second mobile communication network,
wherein, in order to realize, for command and control purposes, a certain quality-of-service level and/or service continuity, the method comprises the following steps:
-- in a first step, the uncrewed aerial system application enabler server is connected to both the first and the second mobile communication network, and the uncrewed aerial system application specific server transmits a message to the uncrewed aerial system application enabler server, UAE server, thereby requesting a command and control connectivity configuration request regarding the uncrewed aerial system,
-- in a second step, the uncrewed aerial system application enabler server transmits, to the uncrewed aerial system application specific server, a command and control operation mode management response regarding the uncrewed aerial system and configures the uncrewed aerial system application enabler client and the uncrewed aerial system application specific client of the uncrewed aerial system accordingly.

## Description

### BACKGROUND

The present invention relates a method for using an uncrewed aerial system with both a first and a second mobile communication network having, or using, different network identifiers in relation to or in the framework of application layer support for uncrewed aerial systems, wherein the uncrewed aerial system is enabled to use connectivity provided by the first and, alternatively, provided by the second mobile communication network via an uncrewed aerial system application enabler server, UAE server, to an uncrewed aerial system application specific server, and wherein the uncrewed aerial system corresponds to, or realizes,
-- an uncrewed aerial system application specific client on an uncrewed aerial system application specific layer, and
-- an uncrewed aerial system application enabler client on an uncrewed aerial system application enabler layer.

Furthermore, the present invention relates to an uncrewed aerial system for being used with both a first and a second mobile communication network having, or using, different network identifiers in relation to or in the framework of application layer support for uncrewed aerial systems, wherein the uncrewed aerial system is enabled to use connectivity provided by the first and, alternatively, provided by the second mobile communication network via an uncrewed aerial system application enabler server, UAE server, to an uncrewed aerial system application specific server, and wherein the uncrewed aerial system corresponds to, or realizes,
-- an uncrewed aerial system application specific client on an uncrewed aerial system application specific layer, and
-- an uncrewed aerial system application enabler client on an uncrewed aerial system application enabler layer.

Additionally, the present invention relates to a system or to a mobile communication networks for using an uncrewed aerial system with both a first and a second mobile communication network having, or using, different network identifiers in relation to or in the framework of application layer support for uncrewed aerial systems, wherein the uncrewed aerial system is enabled to use connectivity provided by the first and, alternatively, provided by the second mobile communication network via an uncrewed aerial system application enabler server, UAE server, to an uncrewed aerial system application specific server, and wherein the uncrewed aerial system corresponds to, or realizes,
-- an uncrewed aerial system application specific client on an uncrewed aerial system application specific layer, and
-- an uncrewed aerial system application enabler client on an uncrewed aerial system application enabler layer.

Furthermore, the present invention relates to a program and to a computer-readable medium for using a user equipment in the framework of service enabler architecture layer for verticals according to the inventive method.

In conventionally known telecommunications networks, it is known to use uncrewed aerial systems (or, unmanned aerial systems) - in the context of the present invention used synonymously with the term uncrewed aerial vehicles - such as, e.g., drones.
In this regard, reliability of traffic regarding uncrewed aerial systems is a very important challenge and target for the aviation industry, e.g., for command and control (C2) or other critical data.
One of the aviation industry's recommendations for the operation of uncrewed aerial systems (and also for AAM - advanced air mobility) is the ability to support robust reliability and flexible redundancy of critical communication links, including cellular, e.g., for command and control (C2) and other flight-critical communications.

### SUMMARY

An object of the present invention is to provide a technically simple, effective and cost-effective solution for using an uncrewed aerial system with both a first and a second mobile communication network having, or using, different network identifiers in relation to or in the framework of application layer support for uncrewed aerial systems. A further object of the present invention is to provide a corresponding uncrewed aerial system, system or mobile communication network, and a corresponding program and computer-readable medium.

The object of the present invention is achieved by a method for using an uncrewed aerial system with both a first and a second mobile communication network having, or using, different network identifiers in relation to or in the framework of application layer support for uncrewed aerial systems, wherein the uncrewed aerial system is enabled to use connectivity provided by the first and, alternatively, provided by the second mobile communication network via an uncrewed aerial system application enabler server, UAE server, to an uncrewed aerial system application specific server, and wherein the uncrewed aerial system corresponds to, or realizes,
-- an uncrewed aerial system application specific client on an uncrewed aerial system application specific layer, and
-- an uncrewed aerial system application enabler client on an uncrewed aerial system application enabler layer,
   wherein the uncrewed aerial system has, using a dual subscription functionality, both a native subscription to the first mobile communication network and to the second mobile communication network,
   wherein, in order to realize, for command and control purposes, a certain quality-of-service level and/or service continuity, the method comprises the following steps:
-- in a first step, the uncrewed aerial system application enabler server is connected to both the first and the second mobile communication network, and the uncrewed aerial system application specific server transmits a message to the uncrewed aerial system application enabler server, UAE server, thereby requesting a command and control connectivity configuration request regarding the uncrewed aerial system,
-- in a second step, the uncrewed aerial system application enabler server transmits, to the uncrewed aerial system application specific server, a command and control operation mode management response regarding the uncrewed aerial system and configures the uncrewed aerial system application enabler client and the uncrewed aerial system application specific client of the uncrewed aerial system accordingly.

According to the present invention, it is advantageously possible that an uncrewed aerial system is able to be used with both a first and a second mobile communication network (having, or using, different network identifiers) in relation to or in the framework of application layer support for uncrewed aerial systems. It is especially advantageous that the uncrewed aerial system is enabled to use connectivity provided by the first and, alternatively, provided by the second mobile communication network (and, potentially, also connectivity that is provided by both the first and the second mobile communication network simultaneously) via an uncrewed aerial system application enabler server, UAE server, to an uncrewed aerial system application specific server. According to the present invention, the uncrewed aerial system corresponds to, or realizes,
-- an uncrewed aerial system application specific client on an uncrewed aerial system application specific layer, and
-- an uncrewed aerial system application enabler client on an uncrewed aerial system application enabler layer.

According to the present invention, it is advantageously possible to enhance the reliability of traffic regarding uncrewed aerial systems. In order to support robust reliability and flexible redundancy of critical communication links, it is especially advantageous that uncrewed aerial systems, provided with dual SIM/subscription, are able to connect (or to register) simultaneously via (or using) two mobile communication networks, especially for transferring (or transmitting) different types of traffic, e.g., using the most reliable network for command and control or other critical data, while other types of traffic might be transmitted over the second network.

Within the context of improving 5G reliability and redundancy for uncrewed aerial vehicles or uncrewed aerial systems, scenarios with dual subscription and multi-network connectivity are especially interesting. For example, drones can be equipped with dual subscription functionality (e.g. dual SIM, or dual credentials) and use one subscription for active communication with one mobile communication network while the second subscription for setting up a "stand-by" connection path, to be used in case the first network becomes unsuitable or unavailable.

Hence, it is possible, according to the present invention, to configure uncrewed aerial system user equipments (or uncrewed aerial vehicle user equipments) with dual subscription (dual USIM) - or, more generally, dual subscription functionality, i.e. a native subscription to both the first mobile communication network and to the second mobile communication network - to activate command and control communication via different networks (such as public land mobile networks or (standalone) non-public networks) or network policies, based on quality-of-service and/or location.

According to the present invention, a viable manner of implementing, and benefitting from, such a dual-subscription uncrewed aerial system (or such a dual-subscription user equipment onboard an uncrewed aerial system) is provided: This is advantageously possible according to the present invention by means of using - for command and control purposes and/or for realizing a certain quality-of-service level and/or service continuity - the steps of:
-- in a first step, the uncrewed aerial system application enabler server is connected to both the first and the second mobile communication network (i.e. it is registered to both networks, especially by means of using the respective credentials), and the uncrewed aerial system application specific server transmits a message to the uncrewed aerial system application enabler server, UAE server, thereby requesting a command and control connectivity configuration request regarding the uncrewed aerial system,
-- in a second step, the uncrewed aerial system application enabler server transmits, to the uncrewed aerial system application specific server, a command and control operation mode management response regarding the uncrewed aerial system and configures the uncrewed aerial system application enabler client and the uncrewed aerial system application specific client of the uncrewed aerial system accordingly.

As a result, according to the present invention, it is advantageously possible to define a service enablement layer exposure mechanism that is able to be used for the uncrewed aerial system traffic management (UTM) or other authorized third party to configure the uncrewed aerial vehicle user equipment with configuration information, especially relating to:
-- how to handle specific traffic across different network connections (public land mobile networks and/or (standalone) non-public networks) - e.g. whether to simultaneously or sequentially (i.e. according to a an active/standby pattern) use connectivity from these networks -,
-- how to configure the uncrewed aerial vehicle user equipment to use dual subscription - e.g. whether to switch between subscriptions, when to switch between subscriptions, how to switch between subscriptions.

According to the present invention, it is furthermore advantageously possible and preferred that the command and control operation mode management response comprises an indication to enable the uncrewed aerial system such that one of the first and second mobile communication networks is used as an active network and the other as a stand-by network for command and control purposes and/or such that both mobile communication networks are used simultaneously for command and control purposes and/or
wherein the uncrewed aerial system application enabler client of the uncrewed aerial system and/or the uncrewed aerial system application specific client of the uncrewed aerial system is configured such as to enable that one of the first and second mobile communication networks is used as an active network and the other as a stand-by network for command and control purposes and/or such that both mobile communication networks are used simultaneously for command and control purposes.

It is thereby advantageously possible to realize and implement the inventive method in a comparatively simple and efficient manner

Furthermore, it is advantageously possible and preferred according to the present invention that the uncrewed aerial system application enabler client selects that one of the first and second mobile communication networks is used as an active network and the other as a stand-by network for command and control purposes and/or selects that both mobile communication networks are used simultaneously for command and control purposes, wherein furthermore the uncrewed aerial system application enabler client transmits a communication mode notification to the uncrewed aerial system application enabler sever, and, subsequently, receives a communication mode notification acknowledgement from the uncrewed aerial system application enabler server.

It is thereby advantageously possible to realize and implement the inventive method in a comparatively simple and efficient manner.

According to the present invention, it is furthermore advantageously possible and preferred that the uncrewed aerial system application enabler client detects a condition for switching the command and control communication mode among the first and second mobile communication networks based on local conditions or based on a command from uncrewed aerial system application specific server(300) and, wherein furthermore the uncrewed aerial system application enabler client transmits a command and control-related trigger event report to the uncrewed aerial system application enabler sever, and, subsequently, receives a command and control operation mode switching message from the uncrewed aerial system application enabler server,
wherein especially the command and control-related trigger event report is indicative of a command from the uncrewed aerial system application specific server or an application quality-of-service attribute change experienced or expected by the uncrewed aerial system and wherein especially the command and control operation mode switching message comprises an instruction, to the uncrewed aerial system to switch the active mode between the first and second mobile communication networks or to activate both.

It is thereby advantageously possible to realize and implement the inventive method in a comparatively simple and efficient manner.

Furthermore, it is advantageously possible and preferred according to the present invention that the dual subscription functionality corresponds to a dual subscriber identity module functionality and/or to a dual universal integrated circuit card functionality and/or to a dual EAP-TLS credential functionality, wherein especially the first mobile communication network is a public land mobile network or a standalone non-public network, and wherein the second mobile communication network is a public land mobile network or a standalone non-public network.

It is thereby advantageously possible to efficiently realize and implement the inventive method in a comparatively simple and flexible manner.

Furthermore, it is advantageously possible and preferred according to the present invention that the command and control connectivity configuration request comprises at least one out of the following:
-- a policy information or a policy indication regarding command and control switching in view of the dual subscription functionality of the uncrewed aerial system,
-- a policy information or a policy indication regarding command and control switching in view of dual radio functionality of the uncrewed aerial system,
-- an information or an indication regarding a command and control service area related to each possibility of using a subscription of the dual subscription functionality of the uncrewed aerial system, wherein the command and control service area especially relates to a respective geographical or to a respective topological area.

It is thereby advantageously possible to realize and implement the inventive method in a comparatively simple and efficient manner.

Furthermore, it is advantageously possible and preferred according to the present invention that the uncrewed aerial system application enabler server is part of an uncrewed aerial system application enabler layer, and wherein the uncrewed aerial system application enabler server is, especially,
-- part of either the first mobile communication network, and then connected also to the second mobile communication network, or part of the second mobile communication network, and then connected also to the first mobile communication network,
   or
-- neither part of the first mobile communication network nor of the second mobile communication network.

It is thereby advantageously possible to realize and implement the inventive method in a comparatively simple and efficient manner.

Furthermore, the present invention relates to an uncrewed aerial system for being used with both a first and a second mobile communication network having, or using, different network identifiers in relation to or in the framework of application layer support for uncrewed aerial systems, wherein the uncrewed aerial system is enabled to use connectivity provided by the first and, alternatively, provided by the second mobile communication network via an uncrewed aerial system application enabler server, UAE server, to an uncrewed aerial system application specific server, and wherein the uncrewed aerial system corresponds to, or realizes,
-- an uncrewed aerial system application specific client on an uncrewed aerial system application specific layer, and
-- an uncrewed aerial system application enabler client on an uncrewed aerial system application enabler layer,

wherein the uncrewed aerial system has, using a dual subscription functionality, both a native subscription to the first mobile communication network and to the second mobile communication network,
wherein, in order to realize, for command and control purposes, a certain quality-of-service level and/or service continuity, the uncrewed aerial system is configured such that:
   -- the uncrewed aerial system application enabler server is connected to both the first and the second mobile communication network, and the uncrewed aerial system application specific server transmits a message to the uncrewed aerial system application enabler server, UAE server, thereby requesting a command and control connectivity configuration request regarding the uncrewed aerial system,
   -- the uncrewed aerial system application enabler server transmits, to the uncrewed aerial system application specific server, a command and control operation mode management response regarding the uncrewed aerial system and configures the uncrewed aerial system application enabler client and the uncrewed aerial system application specific client of the uncrewed aerial system accordingly.

Furthermore, the present invention relates to a system or to mobile communication networks for using an uncrewed aerial system with both a first and a second mobile communication network having, or using, different network identifiers in relation to or in the framework of application layer support for uncrewed aerial systems, wherein the uncrewed aerial system is enabled to use connectivity provided by the first and, alternatively, provided by the second mobile communication network via an uncrewed aerial system application enabler server, UAE server, to an uncrewed aerial system application specific server, and wherein the uncrewed aerial system corresponds to, or realizes,
-- an uncrewed aerial system application specific client on an uncrewed aerial system application specific layer, and
-- an uncrewed aerial system application enabler client on an uncrewed aerial system application enabler layer,

wherein the uncrewed aerial system has, using a dual subscription functionality, both a native subscription to the first mobile communication network and to the second mobile communication network,
wherein, in order to realize, for command and control purposes, a certain quality-of-service level and/or service continuity, the system or mobile communication networks is configured such that:
   -- the uncrewed aerial system application enabler server is connected to both the first and the second mobile communication network, and the uncrewed aerial system application specific server transmits a message to the uncrewed aerial system application enabler server, UAE server, thereby requesting a command and control connectivity configuration request regarding the uncrewed aerial system,
   -- the uncrewed aerial system application enabler server transmits, to the uncrewed aerial system application specific server, a command and control operation mode management response regarding the uncrewed aerial system and configures the uncrewed aerial system application enabler client and the uncrewed aerial system application specific client of the uncrewed aerial system accordingly.

Additionally, the present invention relates to a program comprising a computer readable program code which, when executed on a computer and/or on an uncrewed aerial system and/or on a network node of a first mobile communication network and/or on a network node of a second mobile communication network and/or on an uncrewed aerial system application enabler server and/or on an uncrewed aerial system application specific server, or in part on the uncrewed aerial system and/or in part on the network node of the first mobile communication network and/or in part on the network node of the second mobile communication network and/or in part on the uncrewed aerial system application enabler server and/or in part on the uncrewed aerial system application specific server, causes the computer and/or the uncrewed aerial system and/or the network node of the first mobile communication network and/or the network node of the second mobile communication network and/or the uncrewed aerial system application enabler server and/or the uncrewed aerial system application specific server to perform the inventive method.

Additionally, the present invention relates to a computer-readable medium comprising instructions which when executed on a computer and/or on an uncrewed aerial system and/or on a network node of a first mobile communication network and/or on a network node of a second mobile communication network and/or on an uncrewed aerial system application enabler server and/or on an uncrewed aerial system application specific server, or in part on the uncrewed aerial system and/or in part on the network node of the first mobile communication network and/or in part on the network node of the second mobile communication network and/or in part on the uncrewed aerial system application enabler server and/or in part on the uncrewed aerial system application specific server, causes the computer and/or the uncrewed aerial system and/or the network node of the first mobile communication network and/or the network node of the second mobile communication network and/or the uncrewed aerial system application enabler server and/or the uncrewed aerial system application specific server to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

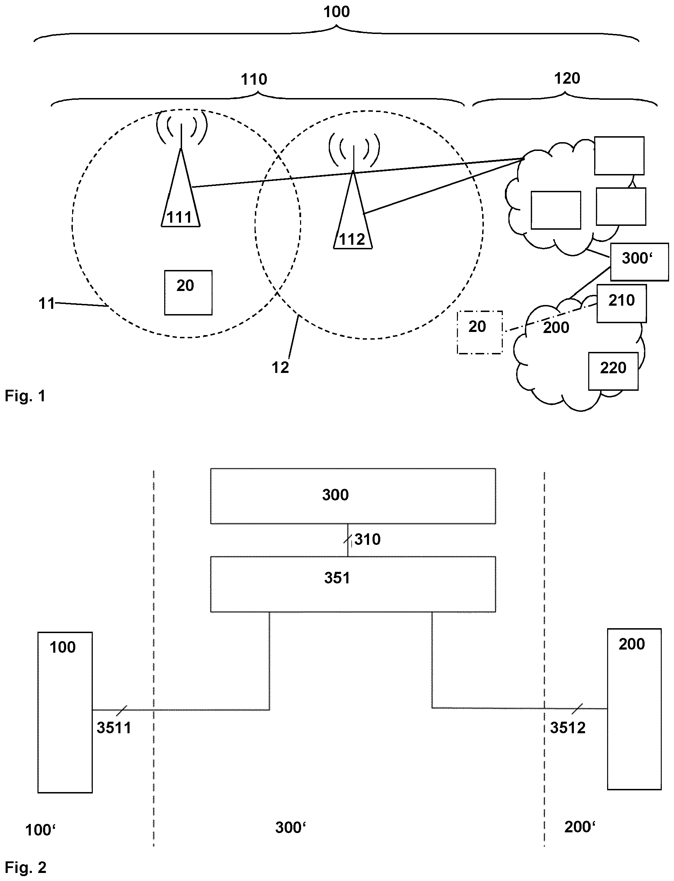

Figure 1 schematically and exemplarily illustrates a telecommunications network, comprising an access network and a core network, as well as a further telecommunications network, also comprising an access network and a core network, and a user equipment aboard an uncrewed aerial vehicle (or, an uncrewed aerial vehicle comprising a user equipment), wherein the uncrewed aerial vehicle uses services provided by an uncrewed aerial system application enabler server (UAE server) and/or an uncrewed aerial system application specific server - either using the first mobile communication network or the second mobile communication network or both - by virtue of using dual subscription functionality.
Figure 2 schematically and exemplarily illustrates a representation of an exemplary implementation of the uncrewed aerial system application specific server and of the uncrewed aerial system application enabler server together with both the first and second mobile communication networks or the first and second mobile communication network domains, respectively.

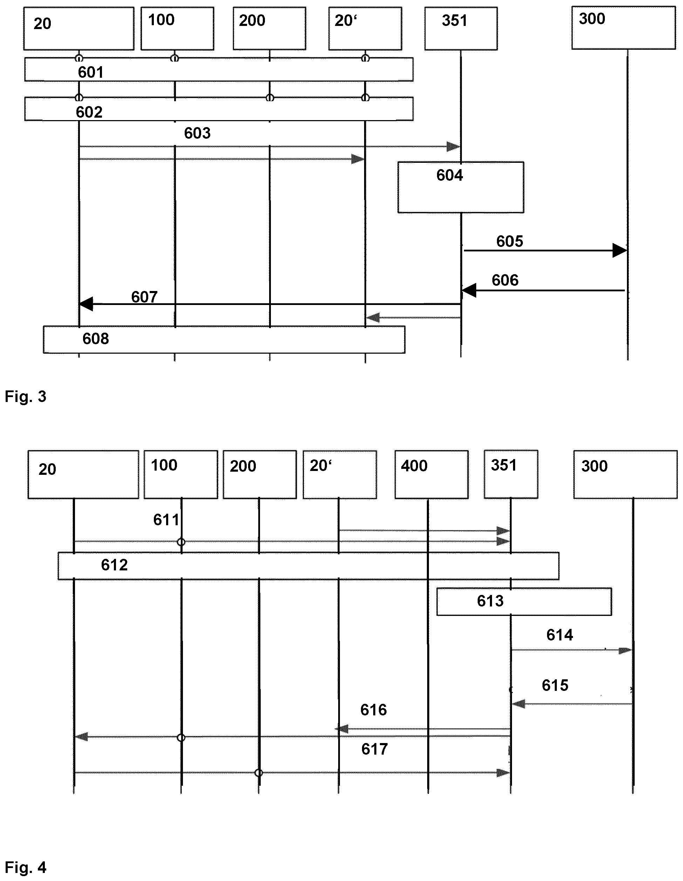

Figure 3 schematically and exemplarily illustrates a communication diagram regarding the procedure command and control communication mode selection by uncrewed aerial system application enabler client when using dual subscription functionality.
Figure 4 schematically and exemplarily illustrates a communication diagram regarding the procedure uncrewed aerial system application enabler-layer assisted dynamic command and control mode switching when using dual subscription functionality.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a mobile communication network 100, comprising an access network 110 and a core network 120, as well as a further mobile communication network 200, likewise comprising an access network 210 and a core network 220, and a user equipment 20 being a user equipment aboard an uncrewed aerial vehicle or uncrewed aerial system is schematically shown. In the context of the present invention, reference sign 20 is also used to designate the uncrewed aerial system (comprising the user equipment).
According to the present invention, the uncrewed aerial vehicle 20 uses services provided by an uncrewed aerial system application enabler server (UAE server) 341 and/or an uncrewed aerial system application specific server 300 - either using the first mobile communication network 100 or the second mobile communication network 200 or both. Furthermore according to the present invention, the user equipment or uncrewed aerial system 20 uses services provided by an uncrewed aerial system application specific layer (UAS application specific layer) and/or an uncrewed aerial system application enabler layer (UAE layer); in addition thereto, the user equipment or uncrewed aerial system 20 especially also uses services provided by a service enabler architecture layer for verticals (SEAL); such an architecture is represented in Figure 5.2-3 of 3GPP TS 23.255 V18.2.0, entitled "UAS application layer functional model".
The uncrewed aerial system application enabler server (UAE server) 341 and the uncrewed aerial system application specific server 300 together especially form a uncrewed aerial system operator domain domain 300' being typically external to both the first and the second mobile communication networks 100, 200, wherein the uncrewed aerial system operator domain domain 300' comprises the uncrewed aerial system application specific server 300 (not separately shown in Figure 1) and at least one uncrewed aerial system application enabler server (UAE server) 341 (likewise not separately shown in Figure 1) to provide services to the uncrewed aerial system 20 or user equipment 20 - either using the first mobile communication network 100 or, alternatively (or simultaneously), and represented using dot-dash lines in Figure 1, using the second mobile communication network 200.
The first mobile communication network 100, as well as the second mobile communication network 200, is especially realized as mobile (cellular) communication networks 100, 200. Both the first mobile communication network 100 and the second mobile communication network 200, especially the respective core networks 120, 220, typically comprise a number of network functions or services that are, however and for the sake of simplification, not explicitly and separately indicated, in Figure 1, by means of reference signs. The (first) access network 110 (of the first mobile communication network 100) exemplary comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. In the exemplary situation shown in Figure 1, the uncrewed aerial system or user equipment 20 (if connected to or with the first mobile communication network 100) is connected, via a radio interface or air interface, to the first base station entity 111 of the access network 110 of the first mobile communication network 100.
If the uncrewed aerial system or user equipment 20 is connected to the second mobile communication network 200 (schematically represented, in Figure 1, by means of using dot-dash lines), the uncrewed aerial system or user equipment 20 is likewise connected, via a radio interface or air interface, to a base station entity (not separately shown in Figure 1 by means of a reference sign) of the (second) access network 210 of the second mobile communication network 200 - and it might also be the case that the uncrewed aerial system or user equipment 20 is simultaneously connected to (and provided with communication services) by both the first and second mobile communication network 100, 200.
According to the present invention, the uncrewed aerial system or user equipment 20 is - or realizes - an uncrewed aerial system application specific client (not separately shown in Figure 1 by means of a reference sign) on the uncrewed aerial system application specific layer, and an uncrewed aerial system application enabler client (not separately shown in Figure 1 by means of a reference sign) on the uncrewed aerial system application enabler layer.
Furthermore, the uncrewed aerial system or user equipment 20 is mobile - i.e. able to move - with respect to the - typically, but not necessarily, static - radio cells 11, 12 or corresponding base station entities 111, 112 of the (first) access network 110 (and as well of the (second) access network 210).
Especially, the uncrewed aerial system or user equipment 20 might comprise an application (not specifically depicted in Figure 1) - hereinafter also called uncrewed aerial system application, e.g. a control application of the uncrewed aerial system - as part of the uncrewed aerial system or user equipment 20; the application typically runs on the uncrewed aerial system or user equipment 20, i.e. the uncrewed aerial system or user equipment 20 typically runs or executes an operating system (such as a mobile (devices) operating system, e.g., android, iOS, iPadOS, etc.), and the application is running on the operating system; alternatively, the application might also be a lower level application not running on or as part of the operating system but as part of, e.g., the subscriber identity module of the uncrewed aerial system or user equipment 20.

According to the present invention, it is advantageously possible to use the uncrewed aerial system or user equipment 20 in relation to or in the framework of the uncrewed aerial system application specific layer (UAS application specific layer), the uncrewed aerial system application enabler layer (UAE layer) and/or the service enabler architecture layer for verticals (SEAL) with (either sequentially or in parallel, i.e. simultaneously) the first mobile communication network 100 and the second mobile communication network 200, these mobile communication networks 100, 200 having, or using, different network identifiers.

In Figure 2, a representation of an exemplary implementation of the uncrewed aerial system application specific server 300 and of the uncrewed aerial system application enabler server 351 together with both the first and second mobile communication networks 100, 200 or the first and second mobile communication network domains 100', 200', respectively.
According to the implementation shown in Figure 2, the communication services are able to be provided - to the uncrewed aerial system or user equipment 20 - by both the first and the second mobile communication networks 100, 200 and using only a single uncrewed aerial system application enabler server 351 to the uncrewed aerial system application specific server 300. The network slice capability enablement server 351 has, or realizes, both an interface or reference point to the first mobile communication network 100 (or the first mobile communication network domain 100') and to the second mobile communication network 200 (of the second mobile communication network domain 200'). Between the uncrewed aerial system application specific server 300 and the uncrewed aerial system application enabler server 351, an interface or reference point 310 is realized, especially of the type Us according to clause 5.4.6 of 3GPP TS 23.255 V18.2.0.

According to the exemplary implementation shown in Figure 2, the uncrewed aerial system application enabler server 351 has or comprises an interface (or reference point) or, a first network interface, 3511 to the first mobile communication network 100, and, as well, an interface (or reference point) or, a second network interface, 3512 to the second mobile communication network 200 (and, if applicable and present, potentially also further interfaces to still further mobile communication networks (not shown in Figure 2) in case more than two mobile communication networks are involved). These interfaces or reference points (or first and second network interfaces) 3511, 3512 of the uncrewed aerial system application enabler server 351 to the first and second mobile communication networks 100, 200, respectively, are especially realized, respectively, as N33 reference points (supporting interactions between the uncrewed aerial system application enabler server 351 and the network exposure function Nnef of the respective mobile communication networks 100, 200).

According to the present invention, the mobile communication networks 100, 200 (or even further networks) shall be able to support service enablement layer exposure mechanisms for the uncrewed aerial system traffic management or other authorized 3rd party to provide the uncrewed aerial system application with configuration information to route different traffic across different network connections simultaneously, e.g. command and control traffic via one of the mobile communication networks 100, 200 and other data via the other one of the mobile communication networks; in this respect, it is to be understood that one (or more) of the mobile communication networks involved might be a public land mobile network and one (or more) of the mobile communication networks involved might be a (standalone) non-public network.
Especially, according to the present invention, there is advantageously no impact on legacy network selection, and it is assumed that uncrewed aerial system traffic handling (or UAV traffic handling), over each mobile communication network, is subject to network control mechanisms (e.g. in accordance with MNO (mobile network operator) traffic routing priorities, available quality-of-service/resources, etc.).
Furthermore preferably, the 5G system(s) (i.e. the mobile communication networks 100, 200) shall be able to support service enablement layer exposure mechanisms for the uncrewed aerial system traffic management or other authorized 3rd party to provide the uncrewed aerial system application with configuration information to route and switch traffic between one active and one standby mobile communication network connection, e.g. for command and control communication reliability and redundancy purpose; again, it is to be understood that one (or more) of the mobile communication networks involved might be a public land mobile network and one (or more) of the mobile communication networks involved might be a (standalone) non-public network and/or there is no impact on legacy network selection.

According to the present invention, it is advantageously possible to support the selection of the communication mode between utilizing more than one mobile communication network (or more than one communication link) over alternative networks when using dual subscription functionality, especially dual subscriber identity module functionality and/or dual universal integrated circuit card functionality and/or a dual EAP-TLS credential functionality.

In the following, a number of procedures are mentioned that are able to be adapted according to the present invention:
Regarding the management of command and control mode selection and/or switching capabilities, it is advantageously possible according to the present invention that the command and control operation mode management request (of the uncrewed aerial system application specific server 300 to the uncrewed aerial system application enabler server 351) according to Figure 7.4.2.1-1 of 3GPP TS 23.255 V18.2.0 ("Command and control operation mode management request / response") provides the possibility to a higher degree of flexibility in case of dual subscription functionality support:
In case of such dual subscription functionality (or dual radio) support in the uncrewed aerial system, then such a request may also include a command and control active/standby configuration information for command and control connectivity of uncrewed aerial system (or vehicle) to select the specific network - based on quality-of-service or a specific time and area for which the respective network connectivity should be valid. If dual radio (or dual subscription functionality) is supported in the uncrewed aerial system, then such request may also include a command and control connectivity via both active links via different networks (e.g. for achieving higher bandwidth to cover payload bandwidth demand).
In its command and control operation mode management response, the uncrewed aerial system application enabler server 351 (if connected to two mobile communication networks 100, 200 - cf. Figure 2) is also able to manage the dual subscription functionality (USIM or dual radio connectivity).
Regarding command and control communication modes configuration (involving command and control modes configuration requests and responses between the uncrewed aerial system application enabler server 351 and the uncrewed aerial system application enabler client (of the uncrewed aerial system 20 itself or its controller, UAV-C) according to Figure 7.4.2.2-1 of 3GPP TS 23.255 V18.2.0 ("Command and control communication modes configuration")), it is advantageously possible according to the present invention to provide a higher degree of flexibility - in case of dual subscription functionality support - by means of the uncrewed aerial system application enabler client being configured which network (of the first and second mobile communication networks 100, 200) to use as active network and which network (of the first and second mobile communication networks 100, 200) to use as a stand-by network. In case dual radio functionality is supported, the uncrewed aerial system application enabler client can be also configured to use both networks simultaneously.
Regarding uncrewed aerial system application enabler-layer assisted dynamic command and control mode switching (cf. clause 7.4.2.4 of 3GPP TS 23.255 V18.2.0) and uncrewed aerial system application specific server triggered command and control communication mode switching (cf. clause 7.4.2.5 of 3GPP TS 23.255 V18.2.0) such prodcedures are either replaced (regarding uncrewed aerial system application enabler-layer assisted dynamic command and control mode switching), or modified (regarding uncrewed aerial system application specific server triggered command and control communication mode switching) by the following two procedures according to the present invention, namely command and control communication mode selection by uncrewed aerial system application enabler client when using dual USIM or dual radio, and uncrewed aerial system application enabler-layer assisted dynamic command and control mode switching when using dual USIM or dual radio. These two procedures are described in the following paragraphs.

The procedure "command and control communication mode selection by uncrewed aerial system application enabler client when using dual USIM or dual radio" provides a mechanism for the uncrewed aerial system application enabler client (i.e. the user equipment 20 or the uncrewed aerial system 20) to select an active command and control communication mode and standby command and control communication mode over command and control links via different network subscriptions (dual USIM) based on command and control communication mode configuration enabled as described in clause 7.4.2.2 of 3GPP TS 23.255 V18.2.0; this is schematically shown in Figure 3, which illustrates the active command and control communication mode selection and standby command and control link negotiation by means of a communication diagram involving the uncrewed aerial system 20 (especially its USIM1/USIM2; wherein a control element of the uncrewed aerial system 20, UAV-C, is designated by means of reference sign 20' in Figure 3), the first and second mobile communication networks 100, 200 as well as the uncrewed aerial system application enabler server 351, and the uncrewed aerial system application specific server 300. In case dual radio is supported, even both links (i.e. using the first and second mobile communication networks 100, 200) can be activated to work simultaneously.
As a prerequisite, the uncrewed aerial system application enabler clients (i.e. the uncrewed aerial systems 20) are configured with a command and control communication modes configuration as described in clause 7.4.2.2 of 3GPP TS 23.255 V18.2.0, and the uncrewed aerial system application enabler server 351 has activated the dynamic command and control mode switching capability, as described in clause 7.4.2.1 of 3GPP TS 23.255 V18.2.0.
In a first processing step 601, the uncrewed aerial system application enabler client (i.e. the uncrewed aerial vehicle 20) selects active communication link based on communication mode configuration; it selects active connectivity via the first mobile communication network 100 or via the second mobile communication network 200 based on the preconfigured policy for command and control and payload communication. In case that dual radio is supported, even both links can be activated to work simultaneously based on a specific quality-of-service threshold.
In a second processing step 602, the uncrewed aerial system application enabler client (i.e. the uncrewed aerial vehicle 20) selects stand-by communication mode based on communication mode configuration; if it supports dual USIM/dual radio, it is able to also select active/stand-by connectivity via the first mobile communication network 100 or via the second mobile communication network 200 based on the preconfigured policy for command and control and payload communication or activate both links via both networks simultaneously.
In a third processing step 603, uncrewed aerial system application enabler client 20 sends a communication mode notification to the uncrewed aerial system application enabler server 351 indicating the selected active and stand-by communication modes and associated command and control link information which may include uncrewed aerial system application enabler client and peer address information (e.g., IP/MAC address); this information is also sent towards the uncrewed aerial system controller, UAV-C, 20'. In a fourth processing step 604, the uncrewed aerial system application enabler server stores the active/stand-by or both active communication modes (command and control and payload) and links information.
In a fifth and a sixth processing steps 605, 606, the uncrewed aerial system application enabler server 351 forwards (fifth processing step 605) the active/stand-by or both active communication modes and links information to the uncrewed aerial system application specific server 300 and receives (sixth processing step 606) a communication mode notification acknowledgement from the uncrewed aerial system application specific server 300.
In a seventh processing step 607, the uncrewed aerial system application enabler server 351 forwards the communication mode notification acknowledgement to the uncrewed aerial system application enabler clients (i.e. the uncrewed aerial system 20 and/or the uncrewed aerial system controller, UAV-C, 20').
In an eighth processing step 608, the uncrewed aerial system 20 (uncrewed aerial vehicle and uncrewed aerial vehicle controller, UAV-C) starts communication (command and control and payload) using the selected network connectivity.

The procedure "uncrewed aerial system application enabler-layer assisted dynamic command and control mode switching when using dual USIM or dual radio" provides a mechanism for supporting dynamic switching between network assisted command and control communications via two different network subscriptions (dual USIM), which may be required while the uncrewed aerial system (or UAV) 20 flight is ongoing, due to possible change of network conditions, expected location/mobility of the uncrewed aerial system/UAV 20; this is schematically shown in Figure 4, which illustrates the procedure (where the uncrewed aerial system application enabler server 351 supports the dynamic command and control mode switching between mobile communication networks 100, 200 for network-assisted command and control communications) by means of a communication diagram involving the uncrewed aerial system 20 (especially its USIM1/USIM2; wherein a control element of the uncrewed aerial system 20, UAV-C, is designated by means of reference sign 20' in Figure 4), the first and second mobile communication networks 100, 200, the location management system 400 as well as the uncrewed aerial system application enabler server 351, and the uncrewed aerial system application specific server 300.
As a prerequisite, the uncrewed aerial system application enabler server 351 has activated the dynamic command and control mode switching capability for dual USIM, as described in clause 7.4.2.1 of 3GPP TS 23.255 V18.2.0. The uncrewed aerial system application enabler server 351 has access to both mobile communication networks 100, 200 (especially using the deployment option shown in Figure 2 - deployment of uncrewed aerial system application enabler server 351 with connections to 3GPP network systems in multiple PLMN/NPN operator (network) domains 100', 200').
Furthermore, the uncrewed aerial system application enabler server 351 has preferably subscribed for using service enabler architecture layer for verticals / location management system (SEAULMS) services and has configured the location event reporting, based on 3GPP TS 23.434. The SEAL/LMS should have access to both networks (e.g. using the deployment option shown in .2figure 8.2-2 of TS 23.434 - deployment of SEAL servers with connections to 3GPP network system in multiple PLMN operators (networks) domains).
The uncrewed aerial system application enabler client (i.e. the uncrewed aerial system 20) has selected a command and control communication mode as described in clause 7.4.2.6 of 3GPP TS 23.255 V18.2.0, and uncrewed aerial vehicle 20 and UAV-C 20' are engaged in command and control communication via one of the first and/or second mobile communication networks 100, 200.
In a first processing step 611, the uncrewed aerial system application enabler client (i.e. the uncrewed aerial vehicle 20) detects a condition for switching command and control communication mode between the two USIMs based on local conditions (e.g. using the command and control communication mode switching policy) or based on a command from the uncrewed aerial system application specific server 300 (as described in clause 7.4.2.5 of 3GPP TS 23.255 V18.2.0); a command and control-related trigger event report is sent from the uncrewed aerial system application enabler client of the UAV 20 via (e.g.) the first mobile communication network 100 and/or the UAV-C 20' to the uncrewed aerial system application enabler server 351, denoting a command from the uncrewed aerial system application specific server 300 or an application quality-of-service attribute change (experienced or expected), e.g. based on the experienced packet delay, packet transfer speed, or packet loss for the Uu (e.g. packet loss greater than a pre-defined threshold).
In a second processing step 612, the uncrewed aerial system application enabler server 351 additionally receives a location report for the uncrewed aerial system 200 (UAV /UAV-C 20') by the service enabler architecture layer for verticals's location management system server; the report can be either periodical or event-based (e.g. UAV 20 moving towards an area covered by a different cell or a different operator or a different network), as specified in 3GPP TS 23.434 SEAL's LM server procedures (UAE Server acting as a VAL server).
In a third processing step 613, the uncrewed aerial system application enabler server 351 determines the switching of the command and control active connectivity via the first mobile communication network 100 to active connectivity via the second mobile communication network 200; this is done by calculating the respective UAV location, as well as other factors like quality-of-service fulfilment/unfulfilment, mobility/speed, direction, topography.
In a fourth processing step 614, the uncrewed aerial system application enabler server 351 sends a command and control mode switching confirmation request to the uncrewed aerial system application specific server 300, which includes the uncrewed aerial system identifier as well as the cause for switching and the switching option (active and stand-by link or both active links); the uncrewed aerial system application enabler server 351 sends this request to obtain confirmation from the uncrewed aerial system application specific server 300 before proceeding with switching between networks 100, 200. The uncrewed aerial system application specific server 300 is therefore also aware of the respective switching.
In a fifth processing step 615, the uncrewed aerial system application enabler server 351 receives from the uncrewed aerial system application specific server 300 a command and control mode switching confirmation response indicating a positive or negative result for the requested change.
In a sixth processing step 616, the uncrewed aerial system application enabler server 351 sends, to the involved uncrewed aerial system application enabler clients (i.e. uncrewed aerial systems 20), a command and control operation mode switching message which provides an instruction to the uncrewed aerial system 20 (UAV and UAV-C 20') to switch the active mode between the networks or to activate both (first and second mobile communication networks 100, 200). The uncrewed aerial system 20 (UAV and UAV-C 20') starts command and control communication using the indicated command and control communication mode (e.g., active link via the second mobile communication network 200).
In a seventh processing step 617, if an emergency switch of the command and control communication is deemed necessary by the uncrewed aerial system application enabler client (e.g. sudden loss of the active command and control link), the uncrewed aerial system application enabler client (i.e. the uncrewed aerial system 20) changes the link prior to the previous first to sixth processing steps 611 to 616), which are skipped. The uncrewed aerial system application enabler clients (i.e. the uncrewed aerial systems 20) send a command and control operation mode switching performed message to the uncrewed aerial system application enabler server 351 to confirm the switching of the command and control communication mode between different networks.

Hence, according to the present invention, the described use cases are able to be used by means of using updated procedures in order to support dual USIM connectivity via two operators' networks (mobile communication networks 100, 200), i.e. two PLMNs, or a PLMN and an SNPN, or two SNPNs, e.g. one command and control connection via the first mobile communication network 100 and another command and control connection via the second mobile communication network 200.

Furthermore, according to the present invention, a new command and control operation mode switching type is introduced - command and control network assisted via the first mobile communication network 100 (public land mobile network or standalone non-public network), command and control network assisted via the second mobile communication network 200 (public land mobile network or standalone non-public network) and switching between them.
More specifically, according to the present invention, it is advantageously possible that mechanisms for new policies are introduced to be configurable via the existing mechanisms for configuration:
-- uncrewed aerial vehicle user equipment 20 to use active/standby mechanism - e.g.
   the first mobile communication network 100 (public land mobile network or standalone non-public network) being active and the second mobile communication network 200 (public land mobile network or standalone non-public network) being standby:
   When the uncrewed aerial vehicle user equipment 20 is reaching a specific configurable quality-of-service threshold (e.g. quality-of-service below a specific target value) on the active network-assisted command and control connection of the first mobile communication network 100 - the uncrewed aerial system application enabler server 351 or the uncrewed aerial vehicle user equipment 20 will switch connectivity to network-assisted command and control connection of the second mobile communication network 200, i.e. the first mobile communication network 100 to be deactivated, and the second mobile communication network 200 to be activated.
   When reaching a specific geographical location or geographical area the uncrewed aerial system application enabler server 351 or the uncrewed aerial vehicle user equipment 20 will switch from the active network assisted command and control connection (e.g. of the first mobile communication network 100) to network-assisted command and control connection of the other network (e.g. the second mobile communication network 200).

By means of the uncrewed aerial system 20 having dual subscription functionality, the uncrewed aerial system or uncrewed aerial vehicle 20 communication module is able to work, regarding connectivity, with both the first and the second mobile communication networks 100, 200 in parallel:
When the uncrewed aerial vehicle user equipment 20 is reaching a specific quality-of-service threshold (e.g. quality-of-service below a specific target value) - network assisted command and control connection of the first mobile communication network 100 to be left active and network assisted command and control connection of the second mobile communication network 200 to be activated in parallel; by means of using both connections, this advantageously leads to the possibility to enable a higher bandwidth availability - having access via two networks in parallel.
The same is true or possible when reaching a specific geographical location or geographical area to activate the connectivity with both the first and the second mobile communication network 100, 200 in parallel.

Hence, the allowed command and control communication mode is able to be extended according to the present invention with network-assisted command and control via dual USIM connectivity. The uncrewed aerial system application enablement information flows might need to be updated to accommodate these policies. Furthermore, it is especially preferred according to the present invention to have service enabler architecture layer for verticals/location management system/uncrewed aerial system (SEAL/LMS/UAS) layer/servers from service providers to be connected both to the first mobile communication network 100 and to the second mobile communication network 200 where the uncrewed aerial vehicle or uncrewed aerial system 20 operates.

## Claims

1. Method for using an uncrewed aerial system (20) with both a first and a second mobile communication network (100, 200) having, or using, different network identifiers in relation to or in the framework of application layer support for uncrewed aerial systems,
wherein the uncrewed aerial system (20) is enabled to use connectivity provided by the first and, alternatively, provided by the second mobile communication network (100, 200) via an uncrewed aerial system application enabler server, UAE server (351), to an uncrewed aerial system application specific server (300), and wherein the uncrewed aerial system (20) corresponds to, or realizes,
-- an uncrewed aerial system application specific client on an uncrewed aerial system application specific layer, and
-- an uncrewed aerial system application enabler client on an uncrewed aerial system application enabler layer,
wherein the uncrewed aerial system (20) has, using a dual subscription functionality, both a native subscription to the first mobile communication network (100) and to the second mobile communication network (200),
wherein, in order to realize, for command and control purposes, a certain quality-of-service level and/or service continuity, the method comprises the following steps:
-- in a first step, the uncrewed aerial system application enabler server (351) is connected to both the first and the second mobile communication network (100, 200), and the uncrewed aerial system application specific server (300) transmits a message to the uncrewed aerial system application enabler server, UAE server (351), thereby requesting a command and control connectivity configuration request regarding the uncrewed aerial system (20),
-- in a second step, the uncrewed aerial system application enabler server (351) transmits, to the uncrewed aerial system application specific server (300), a command and control operation mode management response regarding the uncrewed aerial system (20) and configures the uncrewed aerial system application enabler client and the uncrewed aerial system application specific client of the uncrewed aerial system (20) accordingly.

2. Method according to claim 1, wherein the command and control operation mode management response comprises an indication to enable the uncrewed aerial system (20) such that one of the first and second mobile communication networks (100, 200) is used as an active network and the other as a stand-by network for command and control purposes and/or such that both mobile communication networks (100, 200) are used simultaneously for command and control purposes and/or wherein
the uncrewed aerial system application enabler client of the uncrewed aerial system (20) and/or the uncrewed aerial system application specific client of the uncrewed aerial system (20) is configured such as to enable that one of the first and second mobile communication networks (100, 200) is used as an active network and the other as a stand-by network for command and control purposes and/or such that both mobile communication networks (100, 200) are used simultaneously for command and control purposes.

3. Method according to one of the preceding claims, wherein the uncrewed aerial system application enabler client selects that one of the first and second mobile communication networks (100, 200) is used as an active network and the other as a stand-by network for command and control purposes and/or selects that both mobile communication networks (100, 200) are used simultaneously for command and control purposes, wherein furthermore the uncrewed aerial system application enabler client transmits a communication mode notification to the uncrewed aerial system application enabler sever (351), and, subsequently, receives a communication mode notification acknowledgement from the uncrewed aerial system application enabler server (351).

4. Method according to one of the preceding claims, wherein the uncrewed aerial system application enabler client detects a condition for switching the command and control communication mode among the first and second mobile communication networks (100, 200) based on local conditions or based on a command from uncrewed aerial system application specific server(300) and, wherein furthermore the uncrewed aerial system application enabler client transmits a command and control-related trigger event report to the uncrewed aerial system application enabler sever (351), and, subsequently, receives a command and control operation mode switching message from the uncrewed aerial system application enabler server (351),
wherein especially the command and control-related trigger event report is indicative of a command from the uncrewed aerial system application specific server (300) or an application quality-of-service attribute change experienced or expected by the uncrewed aerial system (20) and wherein especially the command and control operation mode switching message comprises an instruction, to the uncrewed aerial system (20) to switch the active mode between the first and second mobile communication networks (100, 200) or to activate both.

5. Method according to one of the preceding claims, wherein the dual subscription functionality corresponds to a dual subscriber identity module functionality and/or to a dual universal integrated circuit card functionality and/or to a dual EAP-TLS credential functionality, wherein especially the first mobile communication network (100) is a public land mobile network or a standalone non-public network, and wherein the second mobile communication network (200) is a public land mobile network or a standalone non-public network.

6. Method according to one of the preceding claims, wherein the command and control connectivity configuration request comprises at least one out of the following:
-- a policy information or a policy indication regarding command and control switching in view of the dual subscription functionality of the uncrewed aerial system (20),
-- a policy information or a policy indication regarding command and control switching in view of dual radio functionality of the uncrewed aerial system (20),
-- an information or an indication regarding a command and control service area related to each possibility of using a subscription of the dual subscription functionality of the uncrewed aerial system (20), wherein the command and control service area especially relates to a respective geographical or to a respective topological area.

7. Method according to one of the preceding claims, wherein the uncrewed aerial system application enabler server (351) is part of an uncrewed aerial system application enabler layer, and wherein the uncrewed aerial system application enabler server (351) is, especially,
-- part of either the first mobile communication network (100), and then connected also to the second mobile communication network (200), or part of the second mobile communication network (200), and then connected also to the first mobile communication network (100),
or
-- neither part of the first mobile communication network (100) nor of the second mobile communication network (200).

8. Uncrewed aerial system (20) for being used with both a first and a second mobile communication network (100, 200) having, or using, different network identifiers in relation to or in the framework of application layer support for uncrewed aerial systems,
wherein the uncrewed aerial system (20) is enabled to use connectivity provided by the first and, alternatively, provided by the second mobile communication network (100, 200) via an uncrewed aerial system application enabler server, UAE server (351), to an uncrewed aerial system application specific server (300), and wherein the uncrewed aerial system (20) corresponds to, or realizes,
-- an uncrewed aerial system application specific client on an uncrewed aerial system application specific layer, and
-- an uncrewed aerial system application enabler client on an uncrewed aerial system application enabler layer,
wherein the uncrewed aerial system (20) has, using a dual subscription functionality, both a native subscription to the first mobile communication network (100) and to the second mobile communication network (200),
wherein, in order to realize, for command and control purposes, a certain quality-of-service level and/or service continuity, the uncrewed aerial system (20) is configured such that:
-- the uncrewed aerial system application enabler server (351) is connected to both the first and the second mobile communication network (100, 200), and the uncrewed aerial system application specific server (300) transmits a message to the uncrewed aerial system application enabler server, UAE server (351), thereby requesting a command and control connectivity configuration request regarding the uncrewed aerial system (20),
-- the uncrewed aerial system application enabler server (351) transmits, to the uncrewed aerial system application specific server (300), a command and control operation mode management response regarding the uncrewed aerial system (20) and configures the uncrewed aerial system application enabler client and the uncrewed aerial system application specific client of the uncrewed aerial system (20) accordingly.

9. System or mobile communication networks (100, 200) for using an uncrewed aerial system (20) with both a first and a second mobile communication network (100, 200) having, or using, different network identifiers in relation to or in the framework of application layer support for uncrewed aerial systems,
wherein the uncrewed aerial system (20) is enabled to use connectivity provided by the first and, alternatively, provided by the second mobile communication network (100, 200) via an uncrewed aerial system application enabler server, UAE server (351), to an uncrewed aerial system application specific server (300), and wherein the uncrewed aerial system (20) corresponds to, or realizes,
-- an uncrewed aerial system application specific client on an uncrewed aerial system application specific layer, and
-- an uncrewed aerial system application enabler client on an uncrewed aerial system application enabler layer,
wherein the uncrewed aerial system (20) has, using a dual subscription functionality, both a native subscription to the first mobile communication network (100) and to the second mobile communication network (200),
wherein, in order to realize, for command and control purposes, a certain quality-of-service level and/or service continuity, the system or mobile communication networks (100, 200) is configured such that:
-- the uncrewed aerial system application enabler server (351) is connected to both the first and the second mobile communication network (100, 200), and the uncrewed aerial system application specific server (300) transmits a message to the uncrewed aerial system application enabler server, UAE server (351), thereby requesting a command and control connectivity configuration request regarding the uncrewed aerial system (20),
-- the uncrewed aerial system application enabler server (351) transmits, to the uncrewed aerial system application specific server (300), a command and control operation mode management response regarding the uncrewed aerial system (20) and configures the uncrewed aerial system application enabler client and the uncrewed aerial system application specific client of the uncrewed aerial system (20) accordingly.

10. Program comprising a computer readable program code which, when executed on a computer and/or on an uncrewed aerial system (20) and/or on a network node of a first mobile communication network (100) and/or on a network node of a second mobile communication network (200) and/or on an uncrewed aerial system application enabler server (351) and/or on an uncrewed aerial system application specific server (300), or in part on the uncrewed aerial system (20) and/or in part on the network node of the first mobile communication network (100) and/or in part on the network node of the second mobile communication network (200) and/or in part on the uncrewed aerial system application enabler server (351) and/or in part on the uncrewed aerial system application specific server (300), causes the computer and/or the uncrewed aerial system (20) and/or the network node of the first mobile communication network (100) and/or the network node of the second mobile communication network (200) and/or the uncrewed aerial system application enabler server (351) and/or the uncrewed aerial system application specific server (300) to perform a method according one of claims 1 to 7.

11. Computer-readable medium comprising instructions which when executed on a computer and/or on an uncrewed aerial system (20) and/or on a network node of a first mobile communication network (100) and/or on a network node of a second mobile communication network (200) and/or on an uncrewed aerial system application enabler server (351) and/or on an uncrewed aerial system application specific server (300), or in part on the uncrewed aerial system (20) and/or in part on the network node of the first mobile communication network (100) and/or in part on the network node of the second mobile communication network (200) and/or in part on the uncrewed aerial system application enabler server (351) and/or in part on the uncrewed aerial system application specific server (300), causes the computer and/or the uncrewed aerial system (20) and/or the network node of the first mobile communication network (100) and/or the network node of the second mobile communication network (200) and/or the uncrewed aerial system application enabler server (351) and/or the uncrewed aerial system application specific server (300) to perform a method according to one of claims 1 to 7.

## Amended claims

### Amended claims in accordance with Rule 137(2) EPC.

1. Method for using an uncrewed aerial system (20) with both a first and a second mobile communication network (100, 200) having, or using, different network identifiers in relation to or in the framework of application layer support for uncrewed aerial systems,
wherein the uncrewed aerial system (20) is enabled to use connectivity provided by the first and, alternatively, provided by the second mobile communication network (100, 200) via an uncrewed aerial system application enabler server, UAE server (351), to an uncrewed aerial system application specific server (300), and wherein the uncrewed aerial system (20) corresponds to, or realizes,
-- an uncrewed aerial system application specific client on an uncrewed aerial system application specific layer, and
-- an uncrewed aerial system application enabler client on an uncrewed aerial system application enabler layer,
wherein the uncrewed aerial system (20) has, using a dual subscription functionality, both a native subscription to the first mobile communication network (100) and to the second mobile communication network (200),
wherein, in order to realize, for command and control purposes, a certain quality-of-service level and/or service continuity, the method comprises the following steps:
-- in a first step, the uncrewed aerial system application enabler server (351) is connected to both the first and the second mobile communication network (100, 200), and the uncrewed aerial system application specific server (300) transmits a message to the uncrewed aerial system application enabler server, UAE server (351), thereby requesting a command and control connectivity configuration request regarding the uncrewed aerial system (20),
-- in a second step, the uncrewed aerial system application enabler server (351) transmits, to the uncrewed aerial system application specific server (300), a command and control operation mode management response regarding the uncrewed aerial system (20) and configures the uncrewed aerial system application enabler client and the uncrewed aerial system application specific client of the uncrewed aerial system (20) accordingly,
wherein the uncrewed aerial system application enabler client detects a condition for switching the command and control communication mode among the first and second mobile communication networks (100, 200) based on local conditions or based on a command from uncrewed aerial system application specific server(300) and, wherein furthermore the uncrewed aerial system application enabler client transmits a command and control-related trigger event report to the uncrewed aerial system application enabler sever (351), and, subsequently, receives a command and control operation mode switching message from the uncrewed aerial system application enabler server (351).

2. Method according to claim 1, wherein the command and control operation mode management response comprises an indication to enable the uncrewed aerial system (20) such that one of the first and second mobile communication networks (100, 200) is used as an active network and the other as a stand-by network for command and control purposes and/or such that both mobile communication networks (100, 200) are used simultaneously for command and control purposes and/or wherein the uncrewed aerial system application enabler client of the uncrewed aerial system (20) and/or the uncrewed aerial system application specific client of the uncrewed aerial system (20) is configured such as to enable that one of the first and second mobile communication networks (100, 200) is used as an active network and the other as a stand-by network for command and control purposes and/or such that both mobile communication networks (100, 200) are used simultaneously for command and control purposes.

3. Method according to one of the preceding claims, wherein the uncrewed aerial system application enabler client selects that one of the first and second mobile communication networks (100, 200) is used as an active network and the other as a stand-by network for command and control purposes and/or selects that both mobile communication networks (100, 200) are used simultaneously for command and control purposes, wherein furthermore the uncrewed aerial system application enabler client transmits a communication mode notification to the uncrewed aerial system application enabler sever (351), and, subsequently, receives a communication mode notification acknowledgement from the uncrewed aerial system application enabler server (351).

4. Method according to one of the preceding claims,
wherein the command and control-related trigger event report is indicative of a command from the uncrewed aerial system application specific server (300) or an application quality-of-service attribute change experienced or expected by the uncrewed aerial system (20) and wherein the command and control operation mode switching message comprises an instruction, to the uncrewed aerial system (20) to switch the active mode between the first and second mobile communication networks (100, 200) or to activate both.

5. Method according to one of the preceding claims, wherein the dual subscription functionality corresponds to a dual subscriber identity module functionality and/or to a dual universal integrated circuit card functionality and/or to a dual EAP-TLS credential functionality, wherein especially the first mobile communication network (100) is a public land mobile network or a standalone non-public network, and wherein the second mobile communication network (200) is a public land mobile network or a standalone non-public network.

6. Method according to one of the preceding claims, wherein the command and control connectivity configuration request comprises at least one out of the following:
-- a policy information or a policy indication regarding command and control switching in view of the dual subscription functionality of the uncrewed aerial system (20),
-- a policy information or a policy indication regarding command and control switching in view of dual radio functionality of the uncrewed aerial system (20),
-- an information or an indication regarding a command and control service area related to each possibility of using a subscription of the dual subscription functionality of the uncrewed aerial system (20), wherein the command and control service area especially relates to a respective geographical or to a respective topological area.

7. Method according to one of the preceding claims, wherein the uncrewed aerial system application enabler server (351) is part of an uncrewed aerial system application enabler layer, and wherein the uncrewed aerial system application enabler server (351) is, especially,
-- part of either the first mobile communication network (100), and then connected also to the second mobile communication network (200), or part of the second mobile communication network (200), and then connected also to the first mobile communication network (100),
or
-- neither part of the first mobile communication network (100) nor of the second mobile communication network (200).

8. Uncrewed aerial system (20) for being used with both a first and a second mobile communication network (100, 200) having, or using, different network identifiers in relation to or in the framework of application layer support for uncrewed aerial systems,
wherein the uncrewed aerial system (20) is enabled to use connectivity provided by the first and, alternatively, provided by the second mobile communication network (100, 200) via an uncrewed aerial system application enabler server, UAE server (351), to an uncrewed aerial system application specific server (300), and wherein the uncrewed aerial system (20) corresponds to, or realizes,
-- an uncrewed aerial system application specific client on an uncrewed aerial system application specific layer, and
-- an uncrewed aerial system application enabler client on an uncrewed aerial system application enabler layer,
wherein the uncrewed aerial system (20) has, using a dual subscription functionality, both a native subscription to the first mobile communication network (100) and to the second mobile communication network (200),
wherein, in order to realize, for command and control purposes, a certain quality-of-service level and/or service continuity, the uncrewed aerial system (20) is configured such that:
-- the uncrewed aerial system application enabler server (351) is connected to both the first and the second mobile communication network (100, 200), and the uncrewed aerial system application specific server (300) transmits a message to the uncrewed aerial system application enabler server, UAE server (351), thereby requesting a command and control connectivity configuration request regarding the uncrewed aerial system (20),
-- the uncrewed aerial system application enabler server (351) transmits, to the uncrewed aerial system application specific server (300), a command and control operation mode management response regarding the uncrewed aerial system (20) and configures the uncrewed aerial system application enabler client and the uncrewed aerial system application specific client of the uncrewed aerial system (20) accordingly, and
wherein the uncrewed aerial system application enabler client detects a condition for switching the command and control communication mode among the first and second mobile communication networks (100, 200) based on local conditions or based on a command from uncrewed aerial system application specific server(300) and, wherein furthermore the uncrewed aerial system application enabler client transmits a command and control-related trigger event report to the uncrewed aerial system application enabler sever (351), and, subsequently, receives a command and control operation mode switching message from the uncrewed aerial system application enabler server (351).

9. System or mobile communication networks (100, 200) for using an uncrewed aerial system (20) with both a first and a second mobile communication network (100, 200) having, or using, different network identifiers in relation to or in the framework of application layer support for uncrewed aerial systems,
wherein the uncrewed aerial system (20) is enabled to use connectivity provided by the first and, alternatively, provided by the second mobile communication network (100, 200) via an uncrewed aerial system application enabler server, UAE server (351), to an uncrewed aerial system application specific server (300), and wherein the uncrewed aerial system (20) corresponds to, or realizes,
-- an uncrewed aerial system application specific client on an uncrewed aerial system application specific layer, and
-- an uncrewed aerial system application enabler client on an uncrewed aerial system application enabler layer,
wherein the uncrewed aerial system (20) has, using a dual subscription functionality, both a native subscription to the first mobile communication network (100) and to the second mobile communication network (200),
wherein, in order to realize, for command and control purposes, a certain quality-of-service level and/or service continuity, the system or mobile communication networks (100, 200) is configured such that:
-- the uncrewed aerial system application enabler server (351) is connected to both the first and the second mobile communication network (100, 200), and the uncrewed aerial system application specific server (300) transmits a message to the uncrewed aerial system application enabler server, UAE server (351), thereby requesting a command and control connectivity configuration request regarding the uncrewed aerial system (20),
-- the uncrewed aerial system application enabler server (351) transmits, to the uncrewed aerial system application specific server (300), a command and control operation mode management response regarding the uncrewed aerial system (20) and configures the uncrewed aerial system application enabler client and the uncrewed aerial system application specific client of the uncrewed aerial system (20) accordingly, and
wherein the uncrewed aerial system application enabler client detects a condition for switching the command and control communication mode among the first and second mobile communication networks (100, 200) based on local conditions or based on a command from uncrewed aerial system application specific server(300) and, wherein furthermore the uncrewed aerial system application enabler client transmits a command and control-related trigger event report to the uncrewed aerial system application enabler sever (351), and, subsequently, receives a command and control operation mode switching message from the uncrewed aerial system application enabler server (351).

10. Program comprising a computer readable program code which, when executed on a computer and/or on an uncrewed aerial system (20) and/or on a network node of a first mobile communication network (100) and/or on a network node of a second mobile communication network (200) and/or on an uncrewed aerial system application enabler server (351) and/or on an uncrewed aerial system application specific server (300), or in part on the uncrewed aerial system (20) and/or in part on the network node of the first mobile communication network (100) and/or in part on the network node of the second mobile communication network (200) and/or in part on the uncrewed aerial system application enabler server (351) and/or in part on the uncrewed aerial system application specific server (300), causes the computer and/or the uncrewed aerial system (20) and/or the network node of the first mobile communication network (100) and/or the network node of the second mobile communication network (200) and/or the uncrewed aerial system application enabler server (351) and/or the uncrewed aerial system application specific server (300) to perform a method according one of claims 1 to 7.

11. Computer-readable medium comprising instructions which when executed on a computer and/or on an uncrewed aerial system (20) and/or on a network node of a first mobile communication network (100) and/or on a network node of a second mobile communication network (200) and/or on an uncrewed aerial system application enabler server (351) and/or on an uncrewed aerial system application specific server (300), or in part on the uncrewed aerial system (20) and/or in part on the network node of the first mobile communication network (100) and/or in part on the network node of the second mobile communication network (200) and/or in part on the uncrewed aerial system application enabler server (351) and/or in part on the uncrewed aerial system application specific server (300), causes the computer and/or the uncrewed aerial system (20) and/or the network node of the first mobile communication network (100) and/or the network node of the second mobile communication network (200) and/or the uncrewed aerial system application enabler server (351) and/or the uncrewed aerial system application specific server (300) to perform a method according to one of claims 1 to 7.
